# EUROPEAN PATENT SPECIFICATION

(11) **EP 0 444 693 B1**
(45) Date of publication and mention of the grant of the patent: **01.06.1994**
(21) Application number: 91103078.1
(22) Date of filing: 01.03.1991
(51) Int. Cl.: G01B 3/20, H01L 31/042, H01L 27/142, G01D 21/00

(54) **Portable type measuring instrument with solar batteries**
Tragbares Messinstrument mit Solarzellen
Appareil de mesure portable avec des batteries solaires

(30) Priority: 02.03.1990 JP 51302/90
(43) Date of publication of application: 04.09.1991
(73) Proprietor: MITUTOYO CORPORATION, Minato-ku Tokyo 108 (JP)
(72) Inventor: Sasaki, Koji, Kawasaki-shi, Kanagawa 216 (JP)
(74) Representative: Altenburg, Udo, Dipl.-Phys.

(56) References cited:
- EP-A- 0 319 941
- EP-A- 0 324 484
- US-A- 4 542 295
- PATENT ABSTRACTS OF JAPAN vol. 8, no. 243 (E-277)(1680) November 8, 1984 & JP-A-59121892
- PATENT ABSTRACTS OF JAPAN vol. 9, no. 315 (E-365)(2038) December 11, 1985 & JP-A-60147170

## Description

The present invention relates to improvements in a portable type measuring instrument with solar batteries, embracing as a power source a group of solar batteries, in which a plurality of solar batteries are series-connected on the same plane.

It is reported that solar batteries are utilized as a power source for portable type measuring instruments such as a slide caliper and a micrometer (for example, Japanese Patent Application No. 1340/1990 filed by the present applicant).

In general, when solar batteries are utilized as a power source for a portable type measuring instrument, there are many cases where a plurality of single cells of solar batteries are series-connected in order to secure a voltage level required for driving the portable type measuring instrument.

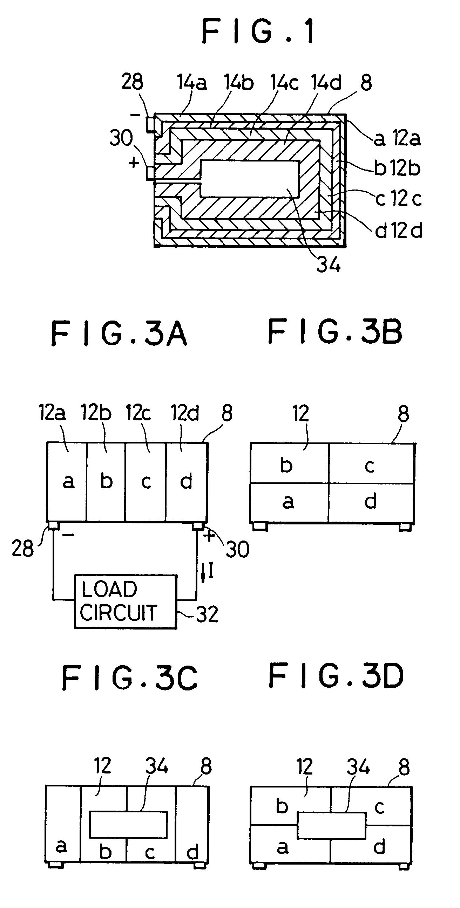

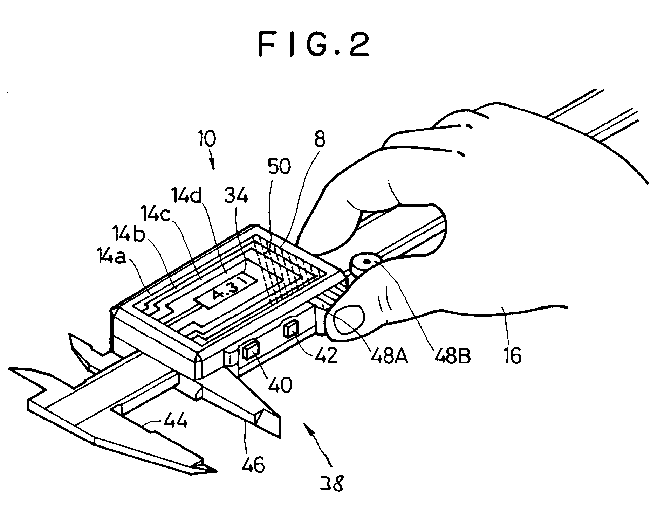

It has been proposed (EPA-A-0 324 484) to design a plurality of light receiving areas with different sizes to compensate for the distance from the light source and equalize the output of each area. With portable measuring instruments using solar batteries, however, the batteries are made of equal size and the problem is that the plurality of batteries is partly screened by the hand of the operator, as explained in detail later. Figs. 3A through 3 D show-the conventional arrangements in which four solar batteries 12, formed of single cells including a cell 'a', 12a, a cell 'b', 12b, a cell 'c', 12c, and a cell 'd', 12d, are series-connected. In Fig. 3A, the cell 'a', 12a, is connected to the cell 'b', 12b, the cell 'b', 12b, to the cell 'c', 12c, and the cell 'c', 12c, to the cell 'd', 12d. Thus, as a whole, the four solar batteries 12 are series-connected. A negative electrode terminal 28 is disposed at one end of the cell 'a', 12a and positive electrode terminal 30 at one end of the cell 'd', 12d. Connected to a portion between the positive electrode terminal 30 and the negative electrode terminal 28 is a load circuit 32, through which an electromotive current I flows. Connecting and function in Figs. 3B through 3D are same as the above.

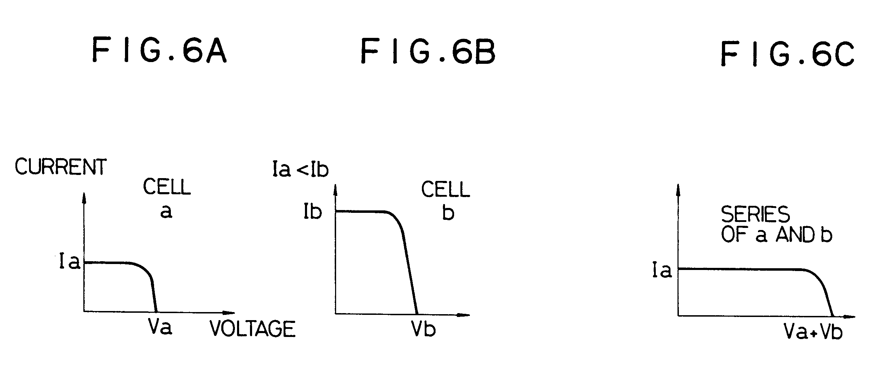

In general, it known that, when a plurality of solar batteries 12 formed of the single cells are series-connected, the magnitude of the electromotive current I flowing through the load circuit 32 is determined by a value of a current in the cell of solar battery 12 where the minimal current flows. Figs. 6A through 6C show the above-described fact. Figs. 6A and 6B show the relationship between the current and the voltage in the solar batteries when the cell 'a' and cell 'b', in their single states, have the maximal electromotive voltages of Va, Vb and the maximal electromotive currents Ia, Ib, respectively. When the cell 'a' and the cell 'b' are series-connected as shown in Fig. 6C, the maximal electromotive voltage is Va + Vb, while, the maximal electromotive current is Ia. Part of the current Ib - Ia is consumed as the heat loss by rejoining between the electrons and the holes.

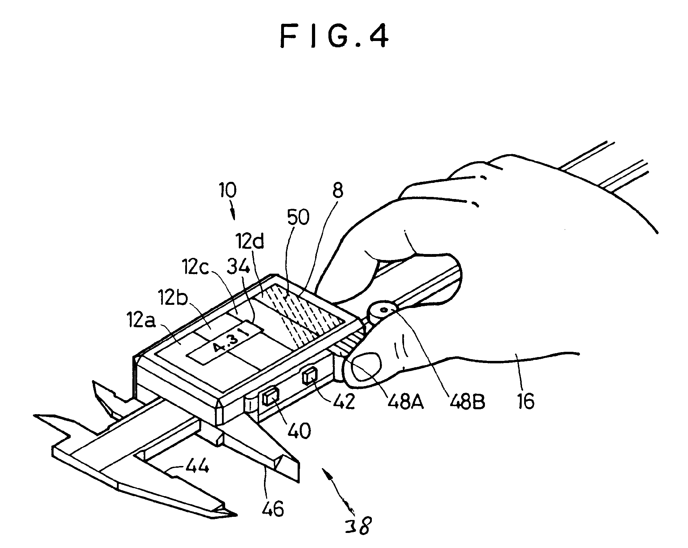

Fig. 4 shows the conventional example in which a group 8 of solar batteries series-connected as shown in Fig. 3 are mounted on a slide caliper 38 as being an example of the portable type measuring instrument 10. The slide caliper 38 is of an electrostatic capacity type (for example, Japanese Patent Laid-Open No. 212711/1984 filed by the present applicant) . The slide caliper 38 has a scale 44 arranged thereon with electrodes, not shown, of a predetermined pitch, and a slider 46 slidable on the scale 44. The slider 46 is mounted thereon with electrodes, not shown, of a predetermined pitch, which are opposed to electrodes of the scale 44, a load circuit 32 for driving the electrodes and processing measuring signals, and a group 8 of solar batteries serving as a power source for feeding a current to the load circuit 32. A display portion 34 is disposed in the central portion of the group 8 of solar batteries. Designated at 40 is an on/off switch for on-off operating the power source and 42 a ZERO switch for zero-setting an original point of measuring. Denoted at 48A is a projection to be pressed by a hand 16 and the like for moving the slider 46, and 48B a block for rotating the side portion of the slider 44 when the slider 46 is moved.

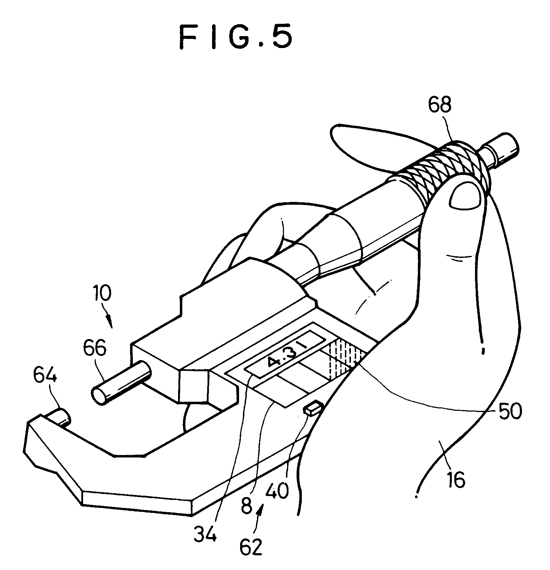

Furthermore, Fig. 5 shows the conventional example in which the group 8 of solar batteries series-connected as shown in Fig. 3 are mounted on a micrometer 62 as being an example of the portable type measuring instrument 10.

When a thimble 68 is rotated, a spindle 66 is forwarded, whereby a dimension between the spindle 66 and an anvil 64 is measured.

Designated at 34 is a display portion for displaying the result of measuring and 8 the group of solar batteries.

However, there has heretofore been presented the following problem when part of an irradiating light to irradiate light receiving windows 14 of the solar batteries 12 is screened by the hand 16 and other holding means for operating and holding the portable type measuring instrument 10.

Namely, when part of irradiating light to the windows 14 for receiving the irradiating light is screened by the hand 16 and the like as shown in Fig. 4 or 5, a light screened region 50 is formed on the light receiving windows 14 of the group 8 of solar batteries. In the arrangements of the group 8 of solar batteries as shown in Figs. 3A through 3D, the light screened region 50 is not substantially uniformly distributed onto the respective light receiving windows 14 and is biased only to a specific light receiving window 14 of the solar batteries 12.

As a result, assuming that the intensities of the irradiating light are uniform at positions of the light receiving windows 14, the electromotive current I of the group 8 of solar batteries, with which the screened solar battery 12 is series-connected, is governed by the electromotive current of the most screened solar battery 12, which has the minimal electromotive current out of the series-connected solar batteries 12. For this reason, there has heretofore been the problem that only the specific light receiving window 14 is intensively subjected to the influence of light screening by the hand 16 and the like for operating and holding the portable type measuring instrument 10, so that the electromotive current I of the group 8 of the series-connected solar batteries as a whole is reduced greatly.

The present invention has been developed to obviate the above-described problem for a portable type measuring instrument with solar batteries, embracing as the power source a group of solar batteries, in which a plurality of solar batteries comprising respective light receiving windows are series-connected on the same plane, and the light receiving windows are made to be substantially equal in area to one another.

To solve the above-described problem, the present invention is characterized in that, each of the light receiving windows has the shape of a loop and that the light receiving windows are disposed closely to each other consecutively surrounding the innermost loop to constitute a broad width loop as a whole.

According to the invention, even if part of the irradiating light to irradiate the light receiving window of the solar batteries is screened by the hand and other holding means for operating and holding the portable type measuring instrument, it is avoidable that only the specific light receiving window is biasedly screened, so that the electromotive current I of the group of the solar batteries can be efficiently produced.

The preferred embodiments will be described with reference to the drawings, wherein like elements have been denoted throughout the figures with like reference numerals, and wherein:
Fig. 1 is a plan view showing the group of the solar batteries used in an embodiment of the present invention;
Fig. 2 shows the appearance of an embodiment of the present invention;
Figs. 3A through 3D are block diagrams showing the arrangement of the conventional groups of the solar batteries;
Fig. 4 shows the appearance of the conventional slide caliper;
Fig. 5 shows the appearance of the conventional micrometer; and
Figs. 6A through 6C are graphic charts showing the relationship between the voltage and current when the plurality of solar batteries are series-connected.

A preferred embodiment of the present invention will hereunder be described in detail with reference to the drawings. However, the present invention should not necessarily be limited to this embodiment.

Fig. 1 shows an example of the arrangement of the group 8 of solar batteries in which the plurality of solar batteries 12 are series-connected on the same plane.

The cell 'a', 12a, the cell 'b', 12b, the cell 'c', 12c, and the cell 'd', 12d, are solar batteries each formed of a single cell. The cell 'a', 12a is connected to the cell 'b', 12b, the cell 'b', 12b to the cell 'c', 12c, the cell 'c', 12c to the cell 'd', 12d, respectively. Thus, as a whole, four solar batteries 12 are series-connected. A negative electrode terminal 28 is connected to the cell 'a', 12a and a positive electrode terminal 30 to the cell 'd', 12d, respectively. Furthermore, denoted at 34 is a a display portion for displaying the results of measuring of the portable type measuring instrument 10.

The cell 'a', 12a, the cell 'b', 12b, the cell 'c', 12c and the cell 'd', 12d have light receiving windows 14a, 14b, 14c and 14d, respectively. The light receiving window 14d of the cell 'd', 12d is formed to provide a loop surrounding the display portion 34, the light receiving window 14c of the cell 12c surrounds the outer periphery of the light receiving window 14d, the light receiving window 14b surrounds the outer periphery of the light receiving window 14c and the light receiving window 14a surrounds the outer periphery of the light receiving window 14b. The light receiving windows 14a, 14b, 14c and 14d are substantially equal in area to one another. To make the areas of the respective light windows 14 substantially equal to one another, the lateral widths of the light receiving windows 14 disposed outer than the light receiving windows 14 on the outer side with respect to the outer peripheral lengths are made smaller than that of ones on the inner side.

Fig. 2 shows an embodiment of the present invention, in which the group 8 of the solar batteries shown in Fig. 1 are mounted. The portable type measuring instrument 10 in this embodiment is the slide caliper 38 which is of an electrostatic capacity type (for example, Japanese Patent Laid-Open No. 212711/1984 filed by the present applicant).

The slide caliper 38 has the scale 44 arranged thereon with electrodes, not shown, of a predetermined pitch, and the slider 46 slidable on the scale 44. The slider 46 is mounted thereon with electrodes, not shown, of a predetermined pitch, which are opposed to the electrodes of the scale 44, the load circuit 32 for driving the electrodes and processing a measuring signal and the group 8 of the solar batteries serving as the power source for supplying a current to the load circuit 32. The display portion 34 for displaying the results of measuring is disposed in the central portion of the group 8 of the solar batteries.

Designated at 40 is the on-off switch for on-off operating the power source and 42 the ZERO switch for zero-setting the original point of measuring. Denoted at 48A is the projection to be pressed when the slider 46 is moved by a hand 16 and the like and 48B the block for rotating the side portion of the slider 44 when the slider 46 is moved.

Action of this embodiment will hereunder be described.

In a state where thumb is applied to the projection 48A and the block 48B, other fingers are placed along the scale 44 whereby the slide caliper 38 is operated and held by the hand 16, when an irradiating light for irradiating the light receiving windows 14 insides from a direction opposite to the side where the light receiving windows 14 are located with respect to the hand 16, the light screened region 50 as indicated by oblique lines as shown in Fig. 2 is formed on the light receiving windows 14. For easier comparison, assumption is made that this light screened region 50 is formed in the same manner as in the conventional example shown in Fig. 4.

However, in this embodiment, it is known from Fig. 2 that the light receiving windows 14 are provided surrounding the outer peripheries of other light receiving windows 14, so that it is avoidable that only the specific light receiving window 14 is biasedly screened. Namely, the more outer the light receiving window 14 (for example, 14a) is located, the larger area the light receiving window 14 becomes screened. However, the more outer the light receiving window 14 (for example, 14a) is located, the outer periphery thereof becomes longer, so that the rate of being screened for the light receiving window 14 on the more outer side is not much different from that for the light receiving window 14 on the more inner side (for example, 14d). The above fact is combined with that the respective light receiving windows 14 are made to be substantially equal in area to one another, so that the respective cells constituting the group 8 of the solar batteries can produce the substantially same levels of the electromotive currents. As a result, the electromotive current I of the group 8 of the solar batteries can be efficiently produced, so that the slide caliper 38 with the solar batteries, capable of efficiently producing the electromotive current I of the group 8 of the solar batteries can be provided.

As has been described hereinabove, the slide caliper 38 has been described as the embodiment of the present invention. However, the group 8 of the solar batteries shown in Fig. 1 may be mounted on the micrometer 62 shown in Fig. 5, so that the micrometer 62 with the solar batteries, capable of efficiently producing the electromotive current I of the group 8 of the solar batteries can be provided similarly.

Furthermore, the example of the arrangement of the group 8 of the solar batteries used in the embodiment of the present invention, in which the plurality of solar batteries 12 are series-connected on the same plane should not be limited to the example of the arrangement shown in Fig. 1. For example, not only the case where the display portion 34 is not disposed in the central portion of the group 8 of the solar batteries but also the case where the display portion 34 is disposed outside the loop of the solar battery 12 may be adopted.

## Claims

1. A portable type measuring instrument (10) with solar batteries, embracing as a power source a group (8) of solar batteries, in which a plurality of solar batteries (12a to 12d) comprising respective light receiving windows (14a to 14d) are series-connected on the same plane and the light receiving windows are made to be substantially equal in area to one another, characterized in that each of the light receiving windows has the shape of a loop, and that the light receiving windows are disposed closely to each other consecutively surrounding the innermost loop to constitute a broad width loop as a whole.

2. The portable type measuring instrument as set forth in claim 1, wherein, to make the respective light receiving windows (14a - 14d) equal in area to one another, the lateral width of the light receiving windows on the outer side with respect to the outer peripheral lengths are made smaller than that of ones on the inner side.

3. The portable type measuring instrument as set forth in claim 1, wherein the innermost light receiving window (14d) is formed to provide a loop surrounding a display portion (34) for displaying the results of measuring.

## Patentansprüche

1. Tragbares Meßinstrument (10) mit Solarbatterien, enthaltend als Stromquelle eine Gruppe (8) von Solarbatterien, wobei eine Mehrzahl von Solarbatterien (12a - 12d) mit jeweiligen lichtempfangenden Fenstern (14a - 14d) auf der gleichen Ebene in Reihe geschaltet sind und die lichtempfindlichen Fenster im wesentlichen flächengleich zueinander ausgebildet sind, dadurch gekennzeichnet, daß jedes der lichtempfangenden Fenster die Form einer Schleife hat, und daß die lichtempfindlichen Fenster nahe aneinander geordnet sind und die innerste Schleife aufeinanderfolgend umgeben, so daß sie insgesamt eine breite Schleife ergeben.

2. Tragbares Meßinstrument nach Anspruch 1, wobei, um die jeweiligen lichtempfangenden Fenster (14a - 14d) flächengleich zueinander zu machen, die Breite der lichtempfangenden Fenster auf der Außenseite im Verhältnis zu ihrer äußeren Umfangslänge kleiner als die der Fenster auf der Innenseite bemessen ist.

3. Tragbares Meßinstrument nach Anspruch 1, wobei das innerste lichtempfangende Fenster (14d) so ausgebildet ist, daß es eine Schleife darstellt, die einen Displayteil (34) zur Anzeige der Meßergebnisse umgibt.

## Revendications

1. Un instrument de mesure (10) de type portable avec des batteries solaires, englobant comme source d'énergie un groupe (8) de batteries solaires, dans lequel une pluralité de batteries solaires (12a à 12d) comportant des fenêtres réceptrices de lumière respectives (14a à 14d) sont montées en série sur le même plan et les fenêtres réceptrices de lumière sont rendues essentiellement de surface égale les unes par rapport aux autres, caractérisé en ce que chacune des fenêtres réceptrices de lumière a la forme d'une boucle, et en ce que les fenêtres réceptrices de lumière sont disposées à proximité les unes des autres en entourant de façon consécutive la boucle située la plus à l'intérieur de manière à constituter globalement une boucle de grande largeur.

2. L'instrument de mesure de type portable tel qu'énoncé dans la revendication 1, dans lequel, pour rendre les fenêtres réceptrices de lumière respectives (14a à 14d) de surface égale les unes par rapport aux autres, la largeur latérale des fenêtres réceptrices de lumière du côté extérieur par rapport aux longueurs périphériques extérieures sont rendues plus petites que celles situées sur le côté intérieur.

3. L'instrument de mesure de type portable tel qu'énoncé dans la revendication 1, dans lequel la fenêtre réceptrice de lumière située le plus à l'intérieur (14d) est formée de manière à constituer une boucle entourant une partie d'affichage (34) pour afficher les résultats de la mesure.
